**Europäisches Patentamt**

**European Patent Office**

**Office européen des brevets**

(11) Veröffentlichungsnummer: **0 019 208**

**A1**

(12) # EUROPÄISCHE PATENTANMELDUNG

(21) Anmeldenummer: 80102500.8

(22) Anmeldetag: 07.05.80

(51) Int. Cl.³: **G 02 F 1/01**
**G 02 F 1/133**

(30) Priorität: 15.05.79 DE 2919572

(43) Veröffentlichungstag der Anmeldung:
26.11.80 Patentblatt 80/24

(84) Benannte Vertragsstaaten:
CH FR GB IT LI NL

(71) Anmelder: SIEMENS AKTIENGESELLSCHAFT Berlin
und München
Postfach 22 02 61
D-8000 München 22(DE)

(72) Erfinder: Kausche, Helmold, Dipl.-Phys.
Tessiner Strasse 146
D-8000 München 71(DE)

(72) Erfinder: Peters, Winfried, Dipl.-Phys.
Tizianstrasse 16
D-8014 Neubiberg(DE)

(72) Erfinder: Krüger, Hans, Dipl.-Phys.
Peralohstrasse 13
D-8000 München 83(DE)

(72) Erfinder: Mayer, Gerhard, Dipl.-Phys.
Germersheimer Strasse 5
D-8000 München 90(DE)

(72) Erfinder: Seebacher, Gerhard, Dr.
Bert-Brecht-Allee 10
D-8000 München 83(DE)

(54) **Passive elektrooptische Anzeigevorrichtung und Verfahren zur Herstellung einer solchen Vorrichtung.**

(57) Die Erfindung bezieht sich auf die Herstellung eines passiven elektrooptischen Displays mit einer diffus reflektierenden Rückelektrode.

Es wird vorgeschlagen, die Rückelektrode (7, ) mit einer Mindestdicke von 25 nm und bei einer Substrat-temperatur aufzusputtern bzw. aufzudampfen, deren Produkt mit der gewählten Schichtdicke größer ist als $2 \times 10^4$ nm x °K. Der Wert dieses Produkts hängt vor allem vom gewählten Werkstoff ab und muß so groß sein, daß die abgeschiedene Schicht Kristallite von der Größenordnung der Lichtwellenlänge bilden kann. In diesem Falle wirkt die Leitschicht wie ein diffuser Reflektor mit hohem Reflexionsgrad. Durch Wahl bestimmter Metalle bzw. Legierungen, durch Steuerung der Kristallitgröße und durch geeignete Überzüge lassen sich auch farbige Leitschichten herstellen. Für die vorliegenden Zwecke eignen sich vor allem Aluminium und Silber.

Das vorgeschlagene Verfahren ist vor allem für Anzeigevorrichtungen gedacht, deren optisch wirksames Medium zwischen einem absorbierenden und einem transparenten Zustand geschaltet werden kann. Bekanntestes Beispiel: Flüssigkristallanzeige mit Farbstoffzusatz.

FIG 1

SIEMENS AKTIENGESELLSCHAFT          Unser Zeichen
Berlin und München                  VPA 79 P 1 0 3 0 EUR

Passive elektrooptische Anzeigevorrichtung und Verfahren zur Herstellung einer solchen Vorrichtung

Die Erfindung betrifft ein Verfahren gemäß dem
Oberbegriff des Anspruchs 1 und bezieht sich außerdem
auf eine nach einem solchen Verfahren hergestellte
Anzeigevorrichtung. Ein derartiges Display wird in
der DE-OS 28 13 007 beschrieben.

Bei einer Anzeige, deren optisches wirksames Medium
zwischen den Zuständen "farbig" und "transparent"
geschaltet wird, sollte die Rückelektrode diffus
streuend ausgebildet sein. Denn dann benötigt man
keinen gesonderten Reflektor mehr und erhält außerdem
eine parallaxefreie, gut lesbare Darstellung ohne
störende Spiegelungen.

Les 1 Ode /15.05.79

Bisher ist es allerdings noch nicht gelungen, eine Leitschicht herzustellen, die ohne zusätzliche Vorkehrungen diffus streuend wirkt. Stattdessen behalf man sich damit, die Elektrode nachträglich aufzurauhen oder, wie in der zitierten Veröffentlichung vorgesehen, auf eine zuvor mattierte Unterlage aufzutragen. Solche zusätzlichen Arbeitsgänge belasten die Fertigung und führen überdies nur dann zu akzeptablen Reflexionsgraden, wenn man sie sehr sorgfältig durchführt.

Der Erfindung liegt die Aufgabe zugrunde, ein Verfahren der eingangs genannten Art anzugeben, mit dem sich ohne besonderen Aufwand eine diffus streuende Rückelektrode erzeugen läßt, die über eine gute Leitfähigkeit und einen hohen Reflexionsfaktor verfügt und zudem je nach Bedarf weiß oder farbig gestaltet werden kann. Diese Aufgabe wird erfindungsgemäß durch ein Verfahren mit den Merkmalen des Patentanspruchs 1 gelöst.

Der Lösungsvorschlag geht von folgender Beobachtung aus. Sputtert man ein Material auf ein Substrat, dann erhält die abgeschiedene Schicht, die unter normalen Sputterbedingungen blank bleibt, überraschenderweise ein mattes Aussehen, wenn die Schichtdicke und die Substrattemperatur oberhalb bestimmter Werte liegt. Die beiden Parameter sind miteinander verknüpft: Bei größeren Schichtdicken genügen kleinere Substrattemperaturen, während kleinere Schichtdicken höhere Substrattemperaturen verlangen.

In erster, recht grober Näherung wird die Schicht dann matt, wenn das Produkt aus Schichtdicke und Substrattemperatur einen kritischen Wert überschreitet. Dieser Grenzwert wird vor allem von dem verwendeten Material bestimmt, hängt allerdings auch noch von anderen Größen wie der Art und dem Druck des Bestäubungsgases, der Beschleunigungsspannung, der Beschaffenheit der Substratoberfläche und der Sputterrate ab. Grundsätzlich die gleichen Zusammenhänge existieren auch dann, wenn man das Metall aufdampft. Allerdings ist hier der erwähnte Grenzwert bei üblichen Aufdampfraten größer und außerdem stärker abhängig von der Abscheiderate als beim Sputtern.

Elektronenmikroskopische Untersuchungen haben gezeigt, daß sich in der niedergeschlagenen Schicht Kristallite bilden, die in der Schichtebene um ein Vielfaches ausgedehnter sind als in Richtung der Schichtnormalen, mit zunehmender Schichtdicke und/oder Substrattemperatur wachsen und dann, wenn die Schicht diffus streut, Abmessungen von der Größe der Lichtwellenlänge erreicht haben.

Dieses charakteristische Kristallgefüge entsteht wahrscheinlich dadurch, daß die Schicht rekristallisiert und teilweise wieder rückverdampft, wobei die nicht auf Gitterplätzen befindlichen Atome bevorzugt abgegeben werden. Die dafür erforderlichen Energien werden einmal durch die kinetische Energie der auftreffenden Partikel und zum anderen durch die Substrataufheizung geliefert. Diese Deutung wird gestützt durch den Befund, daß feinkristalline dünne Schichten durch
Elektronenbeschuß gröber kristallin werden (J. et Appl.
Phys. 32 (1061) 1597), und durch die Tatsache, daß die
Aufsputterrate mit zunehmender Substrattemperatur abnimmt. Sie macht auch verständlich, warum man beim Aufdampfen mit höheren Schichtdicken bzw. Prozeßtemperaturen
als beim Bestäuben arbeiten muß und vielfach nur mit
sehr kleinen Aufdampfraten zum Ziel kommt: Im Vergleich
zum Sputtern sind die Abscheideraten erheblich größer
und die kinetischen Energien der auftreffenden Atome
um Größenordnungen geringer.

Für das vorgeschlagene Verfahren eignen sich vor allem
Aluminium und Silber, bei denen man die in den Ansprüchen 6 bis 8 enthaltenen Bedingungen einhalten
sollte. In Anspruch 4 sind alle Materialien aufgezählt, die für das vorliegende Verfahren infrage
kommen, und zwar geordnet nach ihrer Bedeutung für
die vorliegenden Zwecke. Bei Verwendung von Legierungen (Anspruch 5) sollte man die Bildung von
Mischkristallen anstreben, denn normalerweise stört
ein Legierungspartner das Kristallwachstum des anderen.

Die Rückelektrode erhält eine besonders ausgeprägte
gleichmäßige Oberflächenkörnung und haftet gut an
ihrer Trägerplatte, wenn man die Unterlage zuvor
chemisch anätzt, etwa mit Flußsäure, oder sputterätzt, beispielsweise mit Argon.

Eine weitere Möglichkeit zur Verbesserung des Streuvermögens besteht darin, in der in Anspruch 11
charakterisierten Weise zu bestäuben. Ein solches
Biassputtern begünstigt die Rekristallisation, da nun Plasmaionen auch auf die aufwachsende Schicht treffen und dort ihre Energie abgeben können, und verstärkt außerdem in der Schicht vorhandene Unebenheiten, denn eine profilierte Oberfläche führt zu Feldstärkekonzentrationen und entsprechenden Ionenbündelungen. Der letztgenannte Effekt, der vor allem bei Legierungen mit Partnern unterschiedlicher Abstäubraten zu beobachten ist, läßt sich durch die in Anspruch 12 genannte Maßnahme noch steigern.

Soll die Leitschicht farbig erscheinen, so stehen im Rahmen der Erfindung mehrere Möglichkeiten zur Verfügung.

Mehrere Metalle bzw. Legierungen aus der in Anspruch 4 genannten Gruppe haben von Haus aus bestimmte Farben. So wirkt Au goldfarben; AlCu hat je nach Anteil der beiden Partner Farben zwischen weiß, gelb und rötlich braun; CuZn wirkt in Abhängigkeit von der Zusammensetzung zwischen rotbraun, gelb und grau; NiFe ist, beispielsweise in der Zusammensetzung $Ni_{80}Fe_{20}$, braun; NiCr sieht, etwa bei einer gleichgewichtigen Zusammensetzung silbergrau aus; AlTa erscheint mit einem Ta-Anteil bis etwa 15 Gew.% zwischen weiß und grau; CoGd ist grau und AuNi hat, je nach Anteil der beiden Bestandteile, Farben zwischen gold und grau.

Außerdem könnte man eine Vielzahl von Farben durch geeignet beschaffene Überzüge auf der Rückelektrode bilden, die sich durch reaktives Sputtern, durch thermische oder durch anodische Oxidation erzeugen lassen. Hierfür besonders geeignet Herstellungsverfahren sind Gegenstand der Ansprüche 13 bis 15. Es hat sich gezeigt, daß solche Überschichtungen, die aufgrund von Interferenzeffekten farbig erscheinen, auch auf rauhen Oberflächen Farben liefern können.
Im übrigen kann man auf die Farbhelligkeit durch
Wahl der Korngröße Einfluß nehmen, denn mit zunehmender Oberflächenrauhigkeit werden die Farben
immer dunkler. Die Schicht wird schließlich schwarz,
wenn das auftreffende Licht durch Vielfachstreuung
vollständig absorbiert wird.

Das erfindungsgemäße Herstellungsverfahren findet vor
allem bei "absorptiven" Displays Anwendung, deren
schaltbares Medium beispielsweise eine (Dipol-)
Suspension oder eine Flüssigkristallsubstanz mit
eingelagerten dichroitischen Farbstoffen sein könnte.

Für Flüssigkristallanzeigen bietet die Erfindung noch
einen weiteren Vorteil: Unter geeigneten Umständen
kann die Rückelektrode auch noch als Orientierungsschicht fungieren. So wird die bei absorptiven Flüssigkristall-Displays erforderliche plattensenkrechte
Molekülausrichtung beispielsweise durch einen aufgesputterten Aluminiumoxidfilm induziert.

Weitere vorteilhafte Ausgestaltungen und Weiterbildungen des Lösungsvorschlags sind Gegenstand zusätzlicher Ansprüche.

Im folgenden soll die Erfindung in Verbindung mit
der beigefügten Zeichnung näher erläutert werden.
Dabei zeigen:

Fig. 1 in einem Seitenschnitt eine Flüssigkristallanzeige, die nach dem vorgeschlagenen Verfahren
         hergestellt worden ist;

Fig. 2 in der gleichen Darstellungsweise wie Fig. 1
         eine modifizierte Flüssigkristallanzeige;

Fig. 3 in einem Diagramm die Oberflächenbeschaffenheit von aufgesputtertem Aluminium, in Abhängigkeit von der Schichtdicke und der Substrattemperatur; und

Fig. 4 das gleiche Diagramm für Silber.

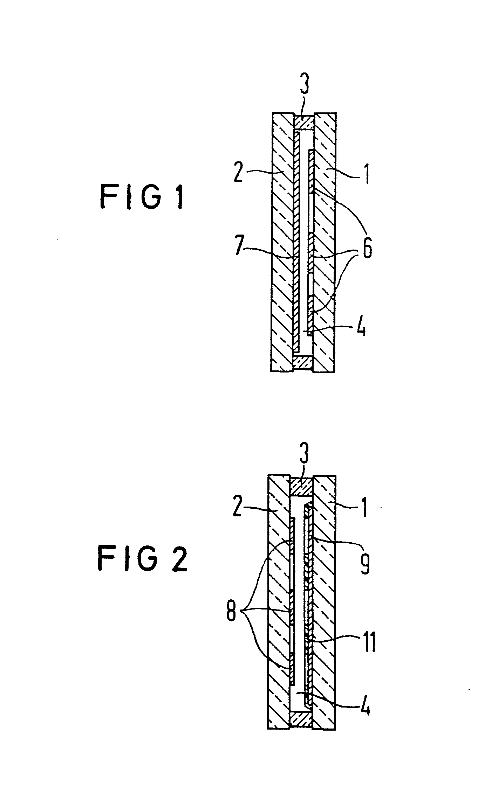

Das Display der Fig. 1 enthält im Einzelnen eine vordere Trägerplatte 1, eine hintere Trägerplatte 2 und einen die beiden Platten dicht miteinander verbindenen Rahmen 3. Die vom Rahmen und den beiden Substraten begrenzte Kammer ist mit einer nematischen Flüssigkristallsubstanz 4 gefüllt. Der Flüssigkristall hat eine negative dielektrische Anisotropie und enthält einen dichroitischen Farbstoff. Die Trägerplatten sind auf ihren Innenseiten jeweils mit elektrisch leitenden Belägen versehen. Der Belag der Vorderplatte besteht aus mehreren, transparenten Segmenten (Vorderelektrodensegmente 6), der Rückplattenbelag ist eine einzige Elektrode (Rückelektrode 7), die in einer bestimmten Farbe diffus reflektiert.

Die Rückelektrode läßt sich folgendermaßen rationell herstellen:
Man bestäubt die Rückplatte bis zu einer Dicke von 80 nm mit Aluminium, und zwar bei einer Substrattemperatur von ca. 70°C und einer Edelgasatmosphäre von $5 \times 10^{-3}$ Torr. In der letzten Sputterphase wird dem Edelgas Sauerstoff zugegeben, der die Oberfläche der Aluminiumschicht oxidiert. Dieser Oxidüberzug liefert die erwünschte Farbe und dient außerdem dazu, die angrenzenden Flüssigkristallmoleküle plattensenkrecht zu orientieren. Wollte man die Farbe der Rückelektrode lokal variieren, so gelingt dies am besten, wenn die Leitschicht durch Masken partiell anodisch oxidiert wird.

Die Vorderelektroden werden in der üblichen Weise hergestellt und mit einer homöotrop orientierenden (nicht dargestellten) Schicht bedeckt.

Die Flüssigkristallanzeige arbeitet folgendermaßen: Im Ruhezustand sind sämtliche Flüssigkristallmoleküle und damit auch die eingebetteten Farbstoffmoleküle in Richtung der Plattennormalen ausgerichtet; die Schicht ist in diesem Zustand lichtdurchlässig. Legt man zwischen eine der Vorderelektrodensegmente und der Rückelektrode eine Spannung, so neigen sich die zwischen beiden Elektroden befindlichen Flüssigkristallmoleküle aus ihrer Ruherichtung heraus; die mitgekippten Farbstoffmoleküle absorbieren das durchtretende Licht. Somit entsteht ein Bild in der Farbstoffarbe vor einem Hintergrund, dessen Farbe durch die Rückelektrode bestimmt wird.

Die in der Fig. 2 dargestellte Ausführung weicht von dem Beispiel der Fig. 1 im wesentlichen darin ab, daß die Rückelektrode aus mehreren Segmenten (Rückelektrodensegmente 8) besteht und die mit 9 bezeichnete Vorderelektrode einteilig gestaltet ist und daß die Innenseite der Vorderplatte außerdem noch mit einer diffus reflektierenden Schicht (Blendenschicht 11) überzogen ist. Die Blende besteht aus dem gleichen Material wie die Rückelektrodensegmente und bedeckt die dazu komplementäre Fläche. Durch diese Maskierung kann man die beiden Trägerplatten durch an sich sichtbare Abstandselemente voneinander distanzieren, Leiterbahnkreuzungen zulassen und das schaltbare Medium sowie die Orientierungsschichten auf den durch die Segmente definierten Raum der Displaykammer beschränken.

Die Segmentierung der Rückelektrode kann auf verschiedene Weise erfolgen: Entweder man scheidet erst ganzflächig ab und entfernt dann selektiv die zu den Segmenten komplementäre Fläche, etwa durch Fotoätzen oder in einer der gebräuchlichen Abhebetechniken, oder aber man scheidet gleich durch eine Maske ab.

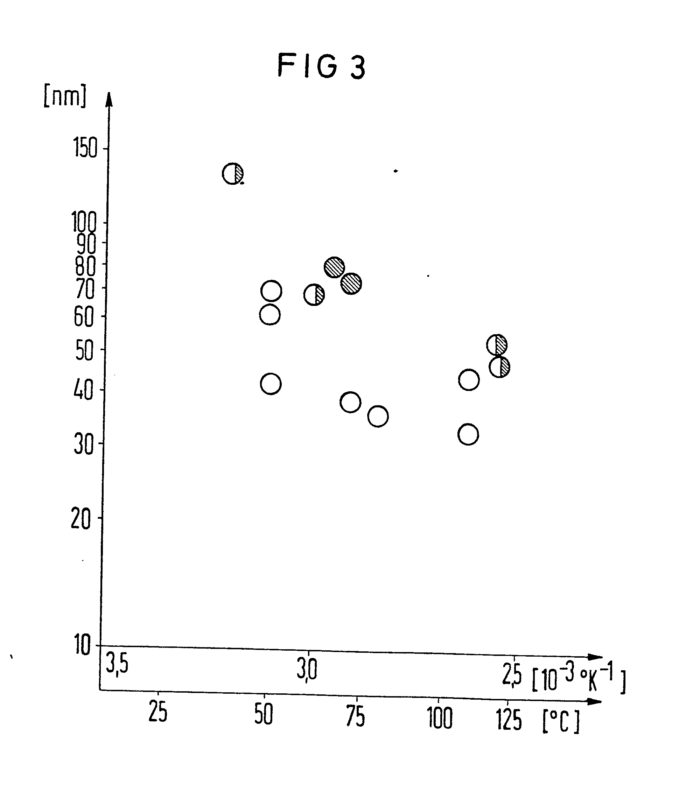

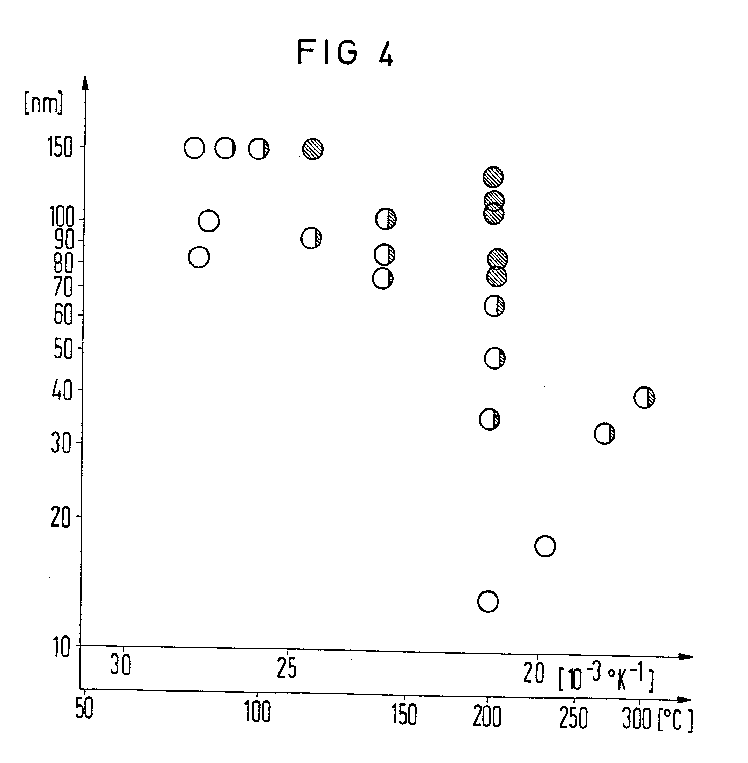

Den Schaubildern der Fig. 3 und 4 kann man entnehmen, bei welchen Substrattemperaturen und Schichtdicken Aluminium (Fig. 3) und Silber (Fig. 4) diffus streuende Oberflächen erhalten, wenn man diese Metalle in einer Edelgas-Atmosphäre von $4 \times 10^{-3}$ Torr aufsputtert. Aufgetragen ist die Schichtdicke, gemessen in nm, gegen die Substrattemperatur, gemessen in $^{\circ}C$ bzw. in $10^{-3} \times {^{\circ}K^{-1}}$. Die einzelnen Meßpunkte sind als Kreise eingezeichnet, wobei die Kreisfläche je nach dem Grad der beobachteten Streuwirkung zu einem mehr oder weniger großen Teil geschwärzt ist (eine gänzlich schwarze Kreisfläche repräsentiert eine vollkommen matte Schicht).

Die Erfindung ist nicht auf die dargestellten Ausführungsbeispiele beschränkt. So kommen neben absorptiven Displays auch andere Anzeigevorrichtungen infrage, insb. bestimmte Ausführungen des sog. "Fluoreszenzaktivierten Displays" (FLAD). Beispielsweise ließe sich der in der älteren Patentanmeldung P 28 35 347 beschriebene FLAD-Typ dahin abwandeln, daß die dortige Rückelektrode auch noch die Funktionen des Kontrastfilters und des Reflektors übernimmt.

21 Patentansprüche

4 Figuren

Patentansprüche

1. Verfahren zur Herstellung einer passiven elektrooptischen Anzeigevorrichtung mit zwei Trägerplatten (Vorderplatte, Rückplatte), die

a) eine bereichsweise zwischen zwei optisch verschiedenen Zuständen schaltbare Schicht zwischen sich einschließen und

b) auf ihren Innenflächen elektrisch leitende Beläge tragen, von denen

c) der Belag der Rückplatte (Rückelektrode) eine diffus reflektierende Oberfläche hat,

d a d u r c h   g e k e n n z e i c h n e t , daß

d) die Rückelektrode (7,9) auf die Rückplatte (2) im Vakuum abgeschieden, also aufgedampft oder aufgesputtert wird, und zwar

e) mit einer Dicke d von mindestens 25 nm und

f) bei einer Rückplattentemperatur t, deren Produkt u mit der gewählten Schichtdicke größer ist als $2 \times 10^4 \, nm \times {}^{o}K$.

2. Verfahren nach Anspruch 1, d a d u r c h g e k e n n z e i c h n e t , daß gilt $30 \, nm \leq d \leq 150 \, nm$.

3. Verfahren nach Anspruch 1 oder 2, d a d u r c h g e k e n n z e i c h n e t , daß gilt $320^{o}K \leq t \leq 780^{o}K$.

4. Verfahren nach einem der Ansprüche 1 bis 3, d a d u r c h   g e k e n n z e i c h n e t , daß zum Abscheiden der Rückelektrode ein Metall aus der Gruppe Al, Ag, Au, Cu, Sn, In, Ni, Pb, Zn, Mg, Fe, Co, Gd, Ti, Pb, Cr, Ta oder eine Legierung unter diesen Metallen verwendet wird.

5. Verfahren nach Anspruch 4, d a d u r c h g e k e n n z e i c h ne t , daß eine Legierung aus der Gruppe AlCu, CuZn, NiFe, NiCr, AlTa, CoGd, AuNi verwendet wird.

6. Verfahren nach Anspruch 4, d a d u r c h g e k e n n z e i c h n e t , daß bei Verwendung von aufgesputtertem Al gilt $40 \text{ nm} \leqslant d \leqslant 150 \text{ nm}$, $300 ^{\circ}K \leqslant t \leqslant 400 ^{\circ}K$ und $u \geqslant 2{,}5 \times 10^{4} \text{ nm} \times {}^{\circ}K$.

7. Verfahren nach Anspruch 4, d a d u r c h g e k e n n z e i c h n e t , daß bei Verwendung von aufgesputtertem Ag gilt $50 \text{ nm} \leqslant d \leqslant 180 \text{ nm}$, $360 ^{\circ}K \leqslant t \leqslant 500 ^{\circ}K$ und $u \geqslant 6 \times 10^{4} \text{ nm} \times {}^{\circ}K$.

8. Verfahren nach Anspruch 4, d a d u r c h g e k e n n z e i c h n e t , daß bei Verwendung von aufgedampftem Al gilt $20 \text{ nm} \leqslant d \leqslant 100 \text{ nm}$, $280 ^{\circ}K \leqslant t \leqslant 320 ^{\circ}K$, $u \geqslant 2{,}5 \times 10^{4}$ und Aufdampfrate $r \leqslant 3 \text{ nm} \times \sec^{-1}$.

9. Verfahren nach einem der Ansprüche 1 bis 8, d a d u r c h g e k e n n z e i c h n e t , daß die Unterlage der Rückelektrode vor dem Abscheiden chemisch angeätzt wird.

10. Verfahren nach einem der Ansprüche 1 bis 8, d a d u r c h   g e k e n n z e i c h n e t , daß die Unterlage der Rückelektrode vor dem Abscheiden sputtergeätzt wird.

11. Verfahren nach einem der Ansprüche 1 bis 10, d a d u r c h   g e k e n n z e i c h n e t , daß die Rückelektrode aufgesputtert wird und während des Abscheidens in der Rückelektrode ein Potential erzeugt wird, das zwischen den Potentialen der Sputteranode und der Sputterkathode liegt.

12. Verfahren nach Anspruch 11, d a d u r c h   g e k e n n z e i c h n e t , daß dem Sputtergas ein reaktives Gas, insb. $O_2$, $N_2$, $F_2$, $Cl_2$ oder ein Kohlenwasserstoffgas, zu Beginn oder während des gesamten Sputterprozesses zugegeben wird.

13. Verfahren nach einem der Ansprüche 1 bis 12, d a d u r c h   g e k e n n z e i c h n e t , daß die abgeschiedene Rückelektrode an ihrer Oberfläche durch reaktives Sputtern oxidiert, nitriert, fluoriert oder karboriert wird.

14. Verfahren nach einem der Ansprüche 1 bis 12, d a d u r c h   g e k e n n z e i c h n e t , daß die abgeschiedene, insb. aus Aluminium bestehende Elektrode an ihrer Oberfläche thermisch oxidiert wird.

15. Verfahren nach einem der Ansprüche 1 bis 12, d a d u r c h   g e k e n n z e i c h n e t , daß die abgeschiedene, insb. aus Ta, Al oder Cu bestehende Rückelektrode auf ihrer Oberfläche anodisch oxidiert wird.

0019208

16. Verfahren nach Anspruch 15, d a d u r c h g e k e n n z e i c h n e t , daß die Rückelektrode durch partielle anodische Oxidation mit Masken einen lokal verschieden starken Oxidüberzug erhält.

17. Verfahren nach einem der Ansprüche 1 bis 16, d a d u r c h g e k e n n z e i c h n e t , daß die Rückelektrode zunächst ganzflächig abgeschieden und dann mittels einer Fototechnik strukturiert wird.

18. Verfahren nach einem der Ansprüche 1 bis 16, d a d u r c h g e k e n n z e i c h n e t , daß die Rückelektrode zunächst ganzflächig abgeschieden und dann mittels einer Abhebetechnik strukturiert wird.

19. Verfahren nach einem der Ansprüche 1 bis 16, d a d u r c h g e k e n n z e i c h n e t , daß die Rückelektrode durch eine Maskierung der Rückplatte beim Abscheiden strukturiert wird.

20. Anzeigevorrichtung, die nach einem Verfahren gemäß einem der Ansprüche 1 bis 19 hergestellt ist, d a d u r c h g e k e n n z e i c h n e t , daß die schaltbare Schicht zwischen einem absorbierenden und einem transparenten Zustand geschaltet werden kann.

21. Anzeigevorrichtung nach Anspruch 20, d a d u r c h g e k e n n z e i c h n e t , daß die schaltbare Schicht aus einer Flüssigkristallschicht (4) mit eingelagerten pleochroitischen Farbstoffen besteht.

FIG 1

FIG 2

FIG 3

3/3

FIG 4

**Europäisches Patentamt**

**EUROPÄISCHER RECHERCHENBERICHT**

Nummer der Anmeldung

EP 80 10 2500

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | PATENT ABSTRACTS OF JAPAN, Band 2, Nr. 112, 16. September 1978, Seite 6187E78 <br><br> & JP - A - 53 77497 (SUWA SEIKOSHA K.K.) <br><br> -- | 1,20, 21 |
| D,A | DE - A - 2 813 007 (EBAUCHES) <br> * Ansprüche 1,4,5; Figur 9 * <br><br> -- | 1,20, 21 |
| A | FR - A - 2 366 659 (I.B.M.) <br> * Seite 1, Zeile 38 - Seite 2, Zeile 25; Anspruch 1 * <br><br> -- | 1,4 |
| A | L. HOLLAND: "Vacuum Deposition of Thin Films", 1970, Chapman and Hall Ltd., Seiten 243-245; 444-457 <br> London, G.B. <br><br> * Seite 245, Absatz 1; Seiten 445,455; Absatz 4 * <br><br> -- | 1,12- 15 |
| A | US - A - 3 498 818 (E.L. BAHM et al.) <br> * Spalte 1, Zeilen 13-49; Spalte 3, Zeilen 22-26 * <br><br> -- | 1-3,6, 8 |
| A | DE - A - 2 123 828 (K.K. SUWA SEIKOSHA) <br> * Ansprüche 3-6 * <br><br> -- | 4 |
| A | DE - A - 2 028 089 (K.K. SUWA SEIKOSHA) | 1,18 |

**KLASSIFIKATION DER ANMELDUNG (Int.Cl. 3)**

G 02 F 1/01
1/133

**RECHERCHIERTE SACHGEBIETE (Int. Cl. 3)**

G 02 F 1/01
1/133
1/17
C 23 C 13/02
15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-08-1980 | BORMS |

EPA form 1503.1  06.78

**EUROPÄISCHER RECHERCHENBERICHT**

Europäisches
Patentamt

| EINSCHLÄGIGE DOKUMENTE | | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | * Seite 7 * | | |
| | -- | | |
| A | <u>DE - A - 2 102 243</u> (PPG INDUSTRIES) <br> * Seite 4; Seite 5, Zeile 10 * | 4,13, <br> 17-19 | |
| | ---- | | |
| | | | RECHERCHIERTE SACHGEBIETE (Int. Cl. ³) |